# EUROPEAN PATENT APPLICATION

(11) **EP 2 533 395 A2**
(43) Date of publication of application: **12.12.2012**
(21) Application number: 11739460.1
(22) Date of filing: 27.01.2011
(51) Int. Cl.: H02J 13/00, H02J 3/00, H02J 3/46

(54) **ENERGY SUPPLY/DEMAND CONTROL SYSTEM**

(30) Priority: 05.02.2010 JP 2010024506
(71) Applicant: Panasonic Corporation, Osaka 571-8501 (JP)
(72) Inventor: KOBAYASI, Susumu, Osaka 540-6207 (JP)
(74) Representative: Rocke, Carsten
(86) International application number: PCT/IB2011/000180
(87) International publication number: WO 2011/095876

(57) **Abstract**

Disclosed is an energy supply/demand control system provided with: a plurality of load apparatuses used within a predetermined area, each having a sensor for detecting usage conditions and the operation states thereof; and an electricity consumption measurement device measuring an electricity amount consumed by the load apparatuses. The energy supply/demand control system is further provided with a control device which obtains at least one of the usage condition and the operation state detected by the sensor, as well as the electricity consumption amount measured by the electricity consumption measurement device, and carries out energy supply/demand control of the apparatuses within the predetermined area based on an estimated consumption amount which is determined by using the information obtained from the sensor and the electricity consumption amount.

## Description

### Field of the Invention

The present invention relates to an energy supply/demand control system which controls energy supply and demand of apparatuses provided within a specific area.

### Background of the Invention

With the recent rise in an environmental consciousness, a variety of technologies for reducing an environmental load are being proposed. In these technologies, the environmental load is reduced by generating or storing energy in a consumer, in addition to purchasing energy such as electricity or gas supplied by a supplying company, and by increasing the efficiency of use of the purchased energy.

For example, there is disclosed a technology for using and controlling distributed energy apparatuses including a power generation apparatus, an electricity storage apparatus, a heat storage apparatus, and a hydrogen storage apparatus in Patent Document 1. In the technology of Patent Document 1, an estimation of the energy demand and supply is calculated based on actual records, and the distributed energy apparatuses are controlled based on the estimation. By employing the technology, it is possible to suppress a shortage or waste of energy due to the variation in a quantity of the energy supply and demand. As a result, the cost of purchasing energy, as well as the environmental load can be reduced.
[Patent Document 1] Japanese Patent Application Publication No. 2004-312798

Meanwhile, in the technology of Patent Document 1, there is provided a plurality of apparatuses which create and store electric energy and thermal energy, and the excess or shortage of the energy supply and demand is prevented by controlling the balancing of the energy supply and demand as a whole. However, in the configuration disclosed in Patent Document 1, there is no employment of a configuration that can control the energy supply and demand in consideration of a usage condition and/or an operation state of load apparatuses that consume energy.

On the other hand, a variety of load apparatuses consuming energy are present in every individual house. Most load apparatuses are each provided with a sensor that detects at least one of the usage condition and the operation state. In such load apparatuses, its operation is autonomously controlled by using information detected by the sensor.

For example, if the load apparatus is an illumination device, the illumination device may be provided with a sensor that measures illuminance on a top of a desk as the usage condition, to thereby autonomously control an output from a light source so as to maintain the illuminance at a set target illuminance. Further, if the load apparatus is an air conditioner, the air conditioner may be provided with a sensor which measures the air temperature or air humidity, a sensor which measures the level of contamination of a filter, and/or a sensor which measures the presence or location of a person within a room, as the usage conditions. Thus, the air conditioner may autonomously control operations such as the output or wind direction by using information detected by these sensors.

Furthermore, if the load apparatus is a washing machine, the washing machine may be provided with a sensor which measures the weight or the dirtiness level of loaded laundry as the usage condition, and a sensor which measures a quantity of injected water as the operation state. Accordingly, it selects an operation state to be set as a operation mode based on the information detected by the sensor. In addition, if the load apparatus is a dishwasher, the dishwasher may be provided with a sensor for measuring the quantity of dishes or the dirtiness of the dishes, to thereby select an operation state to be set as a operation mode as in the washing machine.

As described above, many load apparatuses, each of which has a sensor and autonomously controls its operation based on the information measured by the sensor, are present in a house. However, in the many load apparatuses, the information of the sensor has been individually used in each load apparatus to maintain an environment set by a user or to optimize the operation depending on the usage condition (e.g., quantity of the loaded laundry or dishes).

In other words, the information of the sensor detected by each load apparatus is used only as information at the time of detecting, and is further used only to control the operation of the load apparatus to which the sensor belongs. Accordingly, it is impossible to control the energy supply and demand for load apparatuses within a predetermined area, e.g. in a house, based on actual records of the usage condition or the operation state of the load apparatuses. Further, the information detected by the sensor installed on one of the load apparatuses cannot be used to control the energy supply and demand of the other load apparatuses.

### Summary of the Invention

In view of the above, the present invention provides an energy supply/demand control system capable of controlling the supply/demand of energy in conjunction with load apparatuses installed within a predetermined area.

In accordance with an aspect of the present invention, there is provided an energy supply/demand control system, including: a plurality of load apparatuses used within a specific area, each of the load apparatuses including a sensor detecting a usage condition and an operation state thereof, and being autonomously controlled to operate based on information detected by the sensor; an electricity consumption measurement device which measures an electricity consumption amount of each of the load apparatuses; and a control device which obtains information about at least one of the usage condition and the operation state detected by the sensor and information about the electricity consumption amount measured by the electricity consumption measurement device through communications, calculates an estimated consumption amount based on the information from the sensor and the information about the electricity consumption amount, and controls energy supply and demand for the load apparatuses in the specific area based on the estimated consumption amount.

In the energy supply/demand control system, the control device may include: a history storage unit which stores the information about at least one of the usage condition and the operation state detected by the sensor and the information obtained from the electricity consumption measurement device as history information; and a prediction processing unit which calculates an electricity consumption amount to be consumed by the load apparatuses during a predetermined prediction period as the estimated consumption amount, by using the history information related to the load apparatuses and information about at least one of the usage condition and the operation state detected by the sensor.

In the energy supply/demand control system, when the control device detects an instruction to start operation of one of the load apparatuses, the prediction processing unit may obtain information about at least one of the usage condition and the operation state of the one load apparatus and calculate, as the estimated consumption amount, an electricity consumption amount predicted to be consumed by the one load apparatus during the prediction period from the start to the end of the operation of the one load apparatuses.

Further, the energy supply/demand control system may include: as the load apparatuses, a distributed power source having an power generation device for generating electricity from natural energy; an electric storage device having a storage battery charged by at least one of the distributed power source and a commercial power source, and a remaining capacity detection unit which measures a remaining capacity of the storage battery, the electric storage device serving to supply an electric power from the storage battery to the load apparatus; and a notification device which notifies a user of whether or not each load apparatus is operable. In this case, when the control device detects the instruction to start operation of one of the load apparatuses, the prediction processing unit may calculate the estimated consumption amount of the one load apparatus; in case where there is not any load apparatus that is operating, the prediction processing unit may obtain a reserved remaining capacity by subtracting the estimated consumption amount from the remaining capacity of the storage battery; and, in case where there is another load apparatus that is operating, the prediction processing unit may calculate a sum of the estimated consumption amount of the one load apparatus and a residual obtained by subtracting an electricity amount consumed by the another operating load apparatus from an estimated consumption amount of the another operating load apparatus, and determines a reserved remaining capacity by subtracting the sum from the remaining capacity of the storage battery. Furthermore, when the reserved remaining capacity is equal to or less than a threshold, the notification device may notify a user of a suggestion that the time of starting the operation of the load apparatus be changed to a later time.

### Brief Description of the Drawings

The objects and features of the present invention will become apparent from the following description of embodiments, given in conjunction with the accompanying drawings, in which:
Fig. 1 is a block diagram showing a first embodiment;
Fig. 2 is an operation explanatory view of the first embodiment;
Fig. 3 is a block diagram illustrating a second embodiment;
Fig. 4 is a view representing an example of energy demand prediction in the second embodiment; and
Fig. 5 is a view presenting another example of energy demand prediction in the second embodiment.

### Detailed Description of the Embodiments

Hereinafter, an embodiment of the present invention will be described in detail with reference to the accompanying drawings which form a part hereof. Throughout the drawings, the same reference numerals or letters will be used to designate like or equivalent elements, and so the redundant description thereof will be omitted.

In the embodiments described below, it is described a case where a plurality of load apparatuses are provided in a dwelling house as a predetermined area, but the area may be one dwelling unit in a multi-dwelling complex, a single business location in an office building, or one store in a store building. As for the area, a single area over which a same subject (e.g., a host of a residence, or a manager of a business location or a store) manages a plurality of load apparatuses is assumed. Further, the energy supply/demand control includes notifying a user of an operation recommended to be undertaken in terms of the load apparatuses within the area, in addition to instructing energy supplying devices with respect to the energy demand of the load apparatuses and the energy supply to the load apparatuses.

### (First Embodiment)

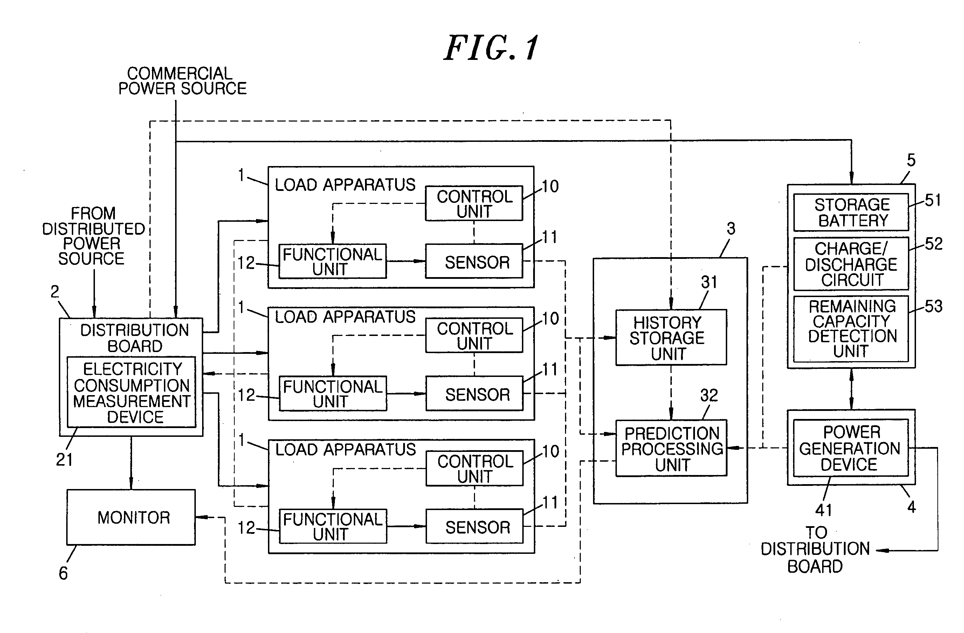

As shown in Fig. 1, the present embodiment will be described in case of applying the present invention to the control of load apparatuses 1 used in a house, for example. In controlling the load apparatuses 1, a distributed energy supply apparatus that generates and stores energy is not essential. However, in the present embodiment, as the distributed energy supply apparatus, a configuration having a distributed power source 4 equipped with an power generation device 41 for generating electricity as power used in a house by using natural energy will be given as an example. Further, in the configuration of the present embodiment, there are provided an electric storage device 5 that stores power from at least one of a commercial power source and the distributed power source 4 and discharges power.

As the power generation device 41 used in the distributed power source 4, a solar power generation device or a wind power generation device is assumed. The distributed power source 4 includes a power conditioner (not shown) capable of adjusting output and generation efficiency. Further, the electric storage device 5 includes a storage battery 51, and a charge/discharge circuit 52 through which the storage battery 51 charges and discharges. Although the storage battery 51 can be charged from at least one of the commercial power source and the distributed power source 4, it is assumed that the storage battery 51 is charged using power of the power generation device 41 installed in the distributed power source 4 in the present embodiment.

In the power generation device 41 that generates power using natural energy, the output changes greatly with time. However, by charging the storage battery 51 with the output of the power generation device 41, it is possible to reduce a change in the output of the power generation device 41. The electric power charged in the storage battery 51 is outputted through the power conditioner, and can be supplied to the load apparatuses 1 along with power from the commercial power source.

In the present embodiment, the distributed power source 4 is not linked to a power system of the commercial power source. However, the distributed power source 4 may be linked to the electric power system of the commercial power source. Further, by charging the storage battery 51 with the electric power of the commercial power source, the electric power supplied from the commercial power source may be equalized. In this case, the electric storage device 5 is shared between the distributed power source 4 and the commercial power source.

In the following description, it is assumed that the distributed power source 4 uses a solar power generation device as the power generation device 41, and the storage battery 51 installed in the electric storage device 5 stores power outputted from the solar power generation device. Further, direct current (DC) electric power outputted from the solar power generation device and DC electric power stored in the storage battery 51 are outputted from the distributed power source 4 via the power conditioner as alternating current electric power. Furthermore, the load apparatuses 1 are supplied with power from one of the commercial power source and the distributed power source 4, and power is not reversely flown to the commercial power source from the distributed power source 4. The electric storage device 5 is provided with a remaining capacity detection unit 53 which measures a remaining capacity of the storage battery 51. The remaining capacity detection unit 53 monitors charge and discharge current of the storage battery 51, thereby measuring the remaining capacity of the storage battery 51.

In the house, there is provided a plurality of load apparatuses 1, a distribution board 2 that distributes electric power to load systems connected to the respective load apparatuses 1. The electric power from the commercial power source and the electric power from the distributed power source 4 are inputted to the distribution board 2. The distribution board 2 is provided with an electricity consumption measurement device 21 that measures an amount of the electricity consumed in each load system (branched). The multiple load apparatuses 1 may be connected to a single load system, but it is assumed that one load apparatus 1 is connected to each load system.

The electricity consumption measurement device 21 employs electronic power meter which measures an electric current of each load system by using, e.g., a Rogowski coil, measures a voltage between lines of each load system, and then calculates an electric power by using both. In this case, the electricity consumption measurement device 21 may measure an electric current, a voltage, and an electric power as the electricity consumption. Next, description will be made for the case of measuring the electric power as the electricity consumption.

The load apparatuses 1 are assumed to be apparatuses that consume electric energy, and include a variety of apparatuses such as an air conditioner, a heater, an illumination device, a cooker, a video player, a refrigerator/freezer, and a water heater. Each of the load apparatuses 1 includes a sensor for detecting a usage condition and an operation state, a functional unit 12 serving as the load apparatus, and a control unit 10 for controlling the functional unit 12 based on output of the sensor 11. That is, in each of the load apparatus 1, the functional unit 12 is autonomously controlled based on information detected by the sensor 11.

The control unit 10 may have a learning function. In this case, the control unit obtains actual records by storing the information detected by the sensor 11, and instructs operation of the load apparatus 1 to achieving energy saving according to a rule proper to the actual records. That is, in the load apparatus 1, the operation is autonomously and adaptively controlled by using the information detected by the sensor 11. If the operation of the load apparatus 1 is conventionally controlled on the basis of the output of the sensor 11, there is a case where the energy is not saved depending on the usage condition or a life pattern of a user. This can be prevented by the learning function for adaptively controlling the operation according to present embodiment.

The usage condition detected by the sensor 11 may include temperature and/or humidity if the load apparatus 1 is an air conditioner, a weight and/or dirtiness level of laundry if the load apparatus 1 is a washing machine, which refers to information externally provided for the load apparatus 1, other than contents instructed by a user. Further, the operation state detected by the sensor 11 is a set temperature if the load apparatus 1 is an air conditioner or the operation mode if the load apparatus 1 is a washing machine, which refers to information provided by a user in the form of instructions to the load apparatus 1. Accordingly, the sensor 11 includes a unit for receiving an instruction from the user, e.g., a switch.

In the above-described embodiment, the usage condition is described not to be instructed by the user and the operation state is described to be the contents based on the instruction of the user. However, it goes without saying that, for example, the dirtiness level may be set by the instruction of the user. In this case, the dirtiness level is included in the operation state.

The load apparatus 1 includes various types of sensors 11, monitor the usage conditions by using the sensors 11, and operate according to the operation states instructed by the user. For example, if the load apparatus 1 is an air conditioner, the control unit 10 operates the functional unit 12 so that the temperature detected as the usage condition by the sensor 11 becomes a temperature which the user inputs to the sensor 11 as the operation state. Further, if the load apparatus 1 is a washing machine, the control unit 10 sets the parameters required to conduct washing, such as the quantity of water and the washing time depending on the weight and dirtiness level of the laundry detected by the sensor 11 as the usage conditions, and then operates the functional unit 12.

Similar to the washing machine, if the load apparatus 1 is the dishwasher, a quantity and a dirtiness level of dishes are detected by the sensor. Further, if the load apparatus 1 is an illumination device, a dimming level and/or illuminance is instructed as the operation state, and the brightness or illuminance is detected as the usage condition. The control unit 10 controls the operation of the functional unit 12 by using information about the usage condition and the operation state detected by the sensor 11.

The information about at least one of the usage condition and the operation state of the load apparatus 1 detected by the sensor 11 installed in each of the load apparatuses 1 as well as the electricity consumption amount measured by the electricity consumption measurement device 21 installed in the distribution board 2 is inputted to the control device 3 provided in the house.

The control device 3 has a communications function, communicates with the sensor 11 and the electricity consumption measurement device 21, and obtains necessary information. In terms of communications scheme, there is no particular limitation. Wired communications through a dedicated communications channel, power line carrier communication using an electric power line as a communications channel, or wireless communications may be used. In Fig. 1, the dotted line indicates a transfer path of information including communications, and the solid line indicates a transmission path of electric power.

The control device 3 may be installed on the distribution board 2. However, if an in-house server is provided in a house, the in-house server may be allowed to function as the control device 3. Alternatively, if a multi-functional electric power meter having a built-in computer and a communications function is employed, the function of the control device 3 may be added to the electric power meter.

In the meantime, the control device 3 is provided with a history storage unit 31 which stores information from the sensor 11 and information from the electricity consumption measurement device 21 as a history. The history storage unit 31 includes a clock unit of keeping the current time, and stores pieces of information acquired from the sensor 11 and the electricity consumption measurement device 21 in a measurement time period (e.g., time period of 5 minutes, 10 minutes, or 30 minutes) as history information along with the date and time in measuring. Further, the history information includes a type of the load apparatus 1. The history information is different depending on the type of the load apparatus 1. Items of the history information in case where the load apparatuses 1 are an air conditioner, a washing machine, an illumination device, and a hot-water supplier heater (electric type) are shown in Table 1.

**[Table 1]**

| Load apparatus | Items of history information | | | | |
|---|---|---|---|---|---|
| Air conditioner | Date and time | External temperature | Set temperature | Presence of person | Power consumption |
| Washing machine | Date and time | Weight | Dirtiness level | | Power consumption |
| Dish washer | Date and time | Quantity of dishes | Dirtiness level | | Power consumption |
| Illumination device | Date and time | Dimming rate | | Presence of person | Power consumption |
| Hot-water supplier | Date and time | water temperature | Set temperature | Presence of person | Power consumption |

In Table 1, the item "presence of person" for the air conditioner may include position of a person in addition to presence of the person. In case of the illumination device, the item "presence of person" may just represent presence of a person. In case of the hot-water supplier, the item "presence of person" may include information about whether or not a person is in a bathtub in addition to information about presence of the person in the place where the heated water is fed from the hot-water supplier, such as a bathroom, a restroom, or a kitchen. The items "weight" and "dirtiness level" of the washing machine are values related to laundry. The item "quantity of dishes" for the dish washer is related to a number and weight of the dishes, and the item "dirtiness level" is a degree of dirtiness of the dishes. The item "water temperature" of the hot-water supplier refers to temperature of water supplied therefrom.

An amount of power consumption is detected for each of the load systems. The load apparatuses shown in Table 1 represent apparatuses that consume a comparatively large amount of electric power in the house. One load apparatus 1 is connected to each load system. The load apparatuses 1 of the same type are usually provided for a plurality of load systems, respectively. Accordingly, the electric power consumed in each load system may be measured instead of that of the load apparatus 1. The load apparatus 1 further may include a refrigerator, a microwave oven, a heater, a video player, an information instrument, a warm-water washing toilet seat, a dish washer/dryer, or a cleaner.

As described above, when the type of load apparatus 1 connected to the load system is known, the type of load apparatus 1 can be included in the history information by mapping the type of load apparatus 1 to each load system. However, in case of the load apparatus 1 plugged into a plug receptacle only when used, the load apparatus 1 cannot be mapped to the load system. In this case, it is preferred that the electricity consumption measurement device 21 is additionally provided with the function of determining the type of load apparatus 1 by using voltage and current characteristic associated with the operation of the load apparatus 1. Alternatively, the energy consumed by such type of load apparatus 1 may be treated as a predetermined quantity of energy loss while the type of load apparatus 1 is not included in the history information.

Meanwhile, a monitor 6 having a display device and an operation unit (a switch or a touch panel) is provided to display the information detected by the sensor 11, the information detected by the electricity consumption measurement device 21, and the history information as they are or after being processed. In a shown example, the monitor 6 is connected to the distribution board 2, but it is not particularly limited thereto. In the monitor 6, display contents may be selected by using the operation unit. The place where the monitor 6 is installed is not particularly restricted. However, the monitor 6 is preferably installed in a room such as a kitchen or a dinning room where the period of stay is long within one day and there are frequent chances to watch the monitor 6.

The control device 3 includes a prediction processing unit 32 which combines and uses the history information stored in the history storage unit 31, and predicts the energy demand of the house in the future based on operation of the load apparatuses 1 installed in the house and use pattern of the electric power by each load system.

The prediction processing unit 32 has the function of calculating an amount of electricity consumption of the load apparatuses 1 estimated to be consumed within a predetermined prediction period as an estimated consumption amount, and the function of performing control of the electric power supply/demand over the load apparatuses of the house based on the estimated consumption amount. To obtain the estimated consumption amount, a plurality of pieces of history information about the load apparatuses 1 stored in the history storage unit 31 and information from the sensors 11 are used.

The control of the electric power supply/demand includes control related to the electric power demand of the load apparatuses 1 described in the present embodiment, and control related to the electric power supply from the distributed power source (e.g. a fuel cell) to be described in a second embodiment.

In the present embodiment, to estimate the electric power demand of the load apparatuses 1, the period from the start to the end of the operation of each load apparatus 1 is set to the prediction period, and the amount of the electricity consumption (i.e., power consumption amount) estimated to be consumed during the prediction period is obtained as the estimated consumption amount.

A plurality of pieces of history information having a condition close to that of the information from the sensor 11 are extracted by comparing the information from the sensor 11 with the history information, and then the estimated consumption amount is interpolated and calculated by using the extracted history information. Further, instead of performing interpolation, the technique of performing a fuzzy operation using the history information, a technique employing a neural network learned by using the history information, or the like may be used.

The estimated consumption amount is calculated at the time when a load apparatus 1 is instructed to start operation. When the control device 3 detects via the sensor 11 that the load apparatus 1 is instructed to start operation, the prediction processing unit 32 calculates an estimated consumption amount of the load apparatus 1. Herein, the instruction of starting operation refers to operation of a user turning on a power switch or turning on a time switch provided in the load apparatus 1.

For example, in case of a washing machine, when laundry is put into the washing machine and when the power switch thereof is turned on, the control device 3 detects via the sensor 11 that the washing machine is instructed to start operation by a user. Accordingly, the prediction processing unit 32 calculates an estimated consumption amount. The prediction processing unit 32 uses the weight and dirtiness level of the laundry detected as usage conditions by the sensor 11 and the history information stored in the history storage unit 31 when calculating the estimated consumption amount.

In the present embodiment, the prediction processing unit 32 calculates the estimated consumption amount (power consumption amount) estimated to be consumed during a time period from start to end of the operation of the load apparatus 1, and then subtracts the estimated consumption amount from a remaining capacity of the storage battery 51 obtained from the remaining capacity detection unit 53 of the electric storage device 5. The result of the subtraction is the remaining capacity of the storage battery 51 after the electric power of the storage battery 51 is used in operation of the load apparatus 1, which is the capacity reserved by the load apparatus 1. As such, hereinafter, the capacity is called the reserved remaining capacity.

When the reserved remaining capacity is negative, this means that electric power is not remaining in the storage battery 51 enough to operate the load apparatus 1. In short, if the reserved remaining capacity is obtained, it is possible to determine whether the load apparatus 1 can be operated using the remaining capacity of the storage battery 51. However, when the electric power is supplied from the storage battery 51 to the load apparatus 1, a variety of losses need to be considered. Accordingly, a threshold corresponding to the loss may be defined. If the reserved remaining capacity is equal to or less than the threshold, it is determined that the load apparatus 1 cannot be operated with the remaining capacity of the storage battery 51.

In the prediction processing unit 32, it is determined that the reserved remaining capacity is equal to or less than the threshold, the electric power is supplied from the commercial power source to the load apparatus 1. In this case, depending on a contract with an electric power company, a unit cost of an electricity rate may be increased when a peak value of the power consumption amount during a given time period (e.g. 30 minutes) exceeds a prescribed value. Further, the electricity rate may be set in a time zone basis. In this case, if the electric power is supplied from the commercial power source to the load apparatus 1 immediately when it is determined that the reserved remaining capacity is equal to or less than the threshold, the electricity rate may be increased.

To cope with this, in the present embodiment, a suggestion that the start of operation of the load apparatus 1 be deferred to a later time is presented to a user through the monitor 6. In addition to a visual presentation method using letters or figures displayed on a screen as the method of presentation using the monitor 6, an auditory presentation method may be conducted by using a warning sound or voice message.

A specific example will be described hereinafter. It is assumed that an electricity rate of 7 to 10 o'clock and 17 to 23 o'clock on a weekday is set to a reference price, a relatively expensive electricity rate is set to 10 to 17 o'clock, and a relatively inexpensive electricity rate is set to 23 o'clock to 7 o'clock of the next day, by a contract with the electric power company. That is, a case in which the unit cost of the electricity rate is put into three categories is presupposed.

Herein, it is considered that laundry is put into a washing machine at 8 o'clock and a power switch of the washing machine is turned on. As described above, the prediction processing unit 32 of the control device 3 estimates an estimated consumption amount, i.e., an amount of the power to be consumed during operation of the washing machine, by using weight and dirtiness level obtained from the sensor 11 and history information stored in the history storage unit 31. Further, a remaining capacity of the storage battery 51 is acquired from the remaining capacity detection unit 53, and a reserved remaining capacity is calculated based on the remaining capacity and the estimated consumption amount.

On the other hand, it is assumed that an air conditioner is in operation at 8 o'clock, and is scheduled to continue to operate until 11 o'clock. In this case, it is considered that the estimated consumption amount of the air conditioner had been already calculated with respect to the remaining capacity of the storage battery 51 at the time when the operation of the air conditioner was started. Therefore, a residual is firstly determined by subtracting an amount of the power consumed during the prediction period from the estimated consumption amount, with respect to the air conditioner. Then, the residual is added to the estimated consumption amount calculated for the washing machine such that a sum of the residual and the estimated consumption amount of the washing machine is obtained. Next, a reserved remaining capacity can be obtained by subtracting the sum from the remaining capacity of the storage battery 51. The reserved remaining capacity is compared with the threshold.

Herein, the reserved remaining capacity equals to a value obtained by subtracting the estimated consumption amount of the washing machine from a value obtained by subtracting the estimated consumption amount of the air conditioner from the remaining capacity of the storage battery 51 at the time when the operation of the air conditioner is started which is regarded as the remaining capacity of the storage battery 51 at the time of starting operation of the washing machine.

Further, when the reserved remaining capacity is equal to or less than the threshold, the prediction processing unit 32 determines that the washing machine cannot be operated with the current remaining capacity of the storage battery 51, and that an electric power needs to be supplied from the commercial power source. At this point, the monitor 6 may display thereon a proposal to change the time of starting operation of the washing machine to a later time, for example, a proposal to operate the washing machine at a time zone (e.g., 23 o'clock to 7 o'clock of the next day) in which the electricity rate is low. Alternatively, the prediction processing unit 32 may present on the monitor 6 that the operation of the washing machine can be made at the time when the storage battery 51 is charged by the power generation device 41.

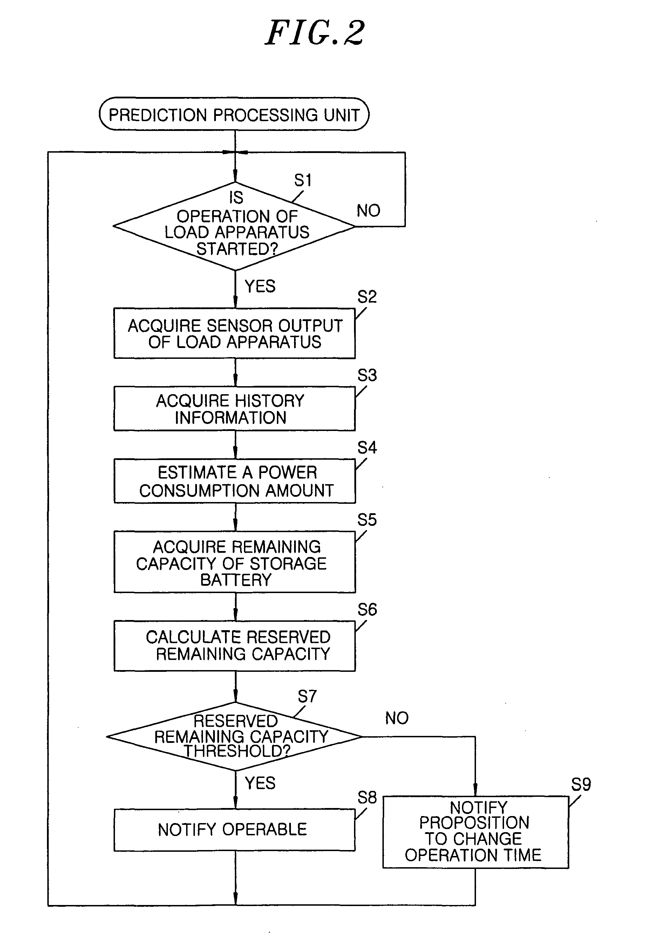

Next, operational procedures of the prediction processing unit 32 are described with reference to Fig. 2. At first, when the control device 3 detects an instruction to start operation of the load apparatus 1 (S1), the prediction processing unit 32 obtains information from the sensor 11 of the load apparatus 1 (S2), and acquires history information from the history storage unit 31 (S3). Then, the prediction processing unit 32 compares the information from the sensor 11 with the history information, and estimates a power consumption amount (i.e., estimated consumption amount) over a prediction period from start to end of the operation of the load apparatus 1 (S4).

Further, the prediction processing unit 32 acquires the remaining capacity of the storage battery 51 from the electric storage device 5 (S5), and calculates a remaining capacity after using an electric power corresponding to the estimated consumption amount of the load apparatus 1 as a reserved remaining capacity (S6). When there is not another load apparatus in operation, the remaining capacity of the storage battery 51 is actual remaining capacity of the storage battery 51 at the time when the load apparatus starts to operate at step S1.

When another load apparatus is being in operation, a value obtained by subtracting the estimated consumption amount of the another load apparatus from the remaining capacity of the storage battery calculated at the time when the another load apparatus was started to operate is regarded as the remaining capacity of the storage battery at the time when the operation of the corresponding load apparatus 1 is started. The calculated reserved remaining capacity is compared with a prescribed threshold (S7). If the reserved remaining capacity exceeds the threshold (S7: yes), the monitor 6 presents that the load apparatus 1 is operable (S8). If the reserved remaining capacity is equal to or less than the threshold (S7: no), the monitor 6 displays a proposition that it is better to change the operation time of the load apparatus 1 (S9).

As described above, in the present embodiment, the power generation device using natural energy such as the sunlight power generation device or the wind power generation device is used as an energy apparatus. Further, the electric storage device 5 having the storage battery 51 is used as an energy storage device, an estimated consumption amount is obtained by using pieces of the information from the sensor 11 and the electricity consumption measurement device 21 and the history information stored in the history storage unit 31. Thus, a relation between the output of the power generation device and the charge/discharge of the storage battery 51 can be controlled with high precision.

### (Second Embodiment)

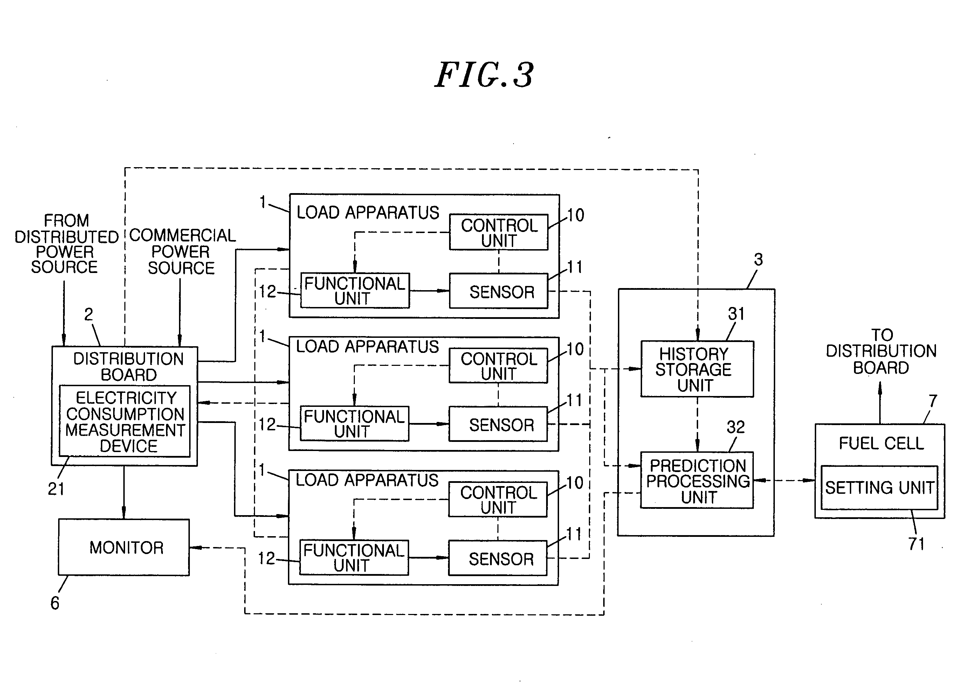

In the first embodiment, the distributed power source 4 and the electric storage device 5 are provided to control the operation of each load apparatus 1 (see Fig. 1). In the present embodiment, a fuel cell 7 is provided as shown in Fig. 3 instead of the distributed power source 4 and the electric storage device 5, and an example of controlling an operation of the fuel cell 7 will be described. That is, in the present embodiment, a cogeneration apparatus that generates both electric energy and thermal energy is given as the energy apparatus that generates energy used in a house. Here, it is assumed that the cogeneration apparatus generates the electric and the thermal energy from the fuel cell 7. However, a cogeneration apparatus that drives a generator by using a gas engine may be used.

In this type of cogeneration apparatus, a hot water storage tank is used to store the thermal energy, and thus the thermal energy is stored as a quantity of hot water. Further, a storage battery may be used to store the electric energy together with the hot water storage tank. That is, the energy generating apparatus includes the hot water storage tank and the storage battery.

Primary side electric power of the distribution board 2 includes electric power generated by using the fuel cell 7. Further, the fuel cell 7 for a house generally does not have enough capacity to supply the whole electric power for the house when used independently. Preferably, the fuel cell 7 is used in the primary side electric power by grid-connection with an electric power system through which an electric power supplying company supplies electric power.

The prediction processing unit 32 of the present embodiment predicts an energy demand for each prediction period (typically one day, but it may be a period such as one week or one year). In the present embodiment, since the fuel cell 7 is used as the energy generating apparatus, it is necessary to predict both a demand for the electric energy and a demand for thermal energy as the energy demand.

In a case in which demand prediction is made for two types of energy, when demand for one of a quantity of the electric energy generated by the fuel cell 7 and a quantity of the thermal energy obtained when such a quantity of the electric energy is generated is met, demand for the other is frequently not satisfied, i.e., excess or short.

To cope with this problem, an operation of the fuel cell 7 is controlled such that one of prediction demands for the electric energy and the thermal energy is met and shortage occurs in the other. Then, the energy shortage is purchased. The fuel cell 7, it typically meets the demand for the electric energy, while the thermal energy is stored in the hot water storage tank and a shortage thereof is supplemented by heating the water. Energy required for the heating is purchased as electric power from the electric power system, or as fuel gas.

The prediction processing unit 32 predicts demands of the electric energy and the thermal energy for each prediction period by using the history information stored in the history storage unit 31. For example, it is possible to determine an operation schedule in which excess or short does not occur in the electric energy and the thermal energy of a day by predicting a demand of the day based on the history information of the previous day.

Meanwhile, since there are included detection information of the sensor 11 installed on each load apparatus 1 and information about the electric power of each load system in the history storage unit 31, usage conditions of the plurality of load apparatuses 1 and a life pattern of a user can be considered, and the demand prediction of energy can be made with accuracy. Accordingly, the operation schedule can be optimized. As a result, a balance in demand and supply of energy can be made very precise. Procedures and rules for optimizing the operation schedule needs to be preset.

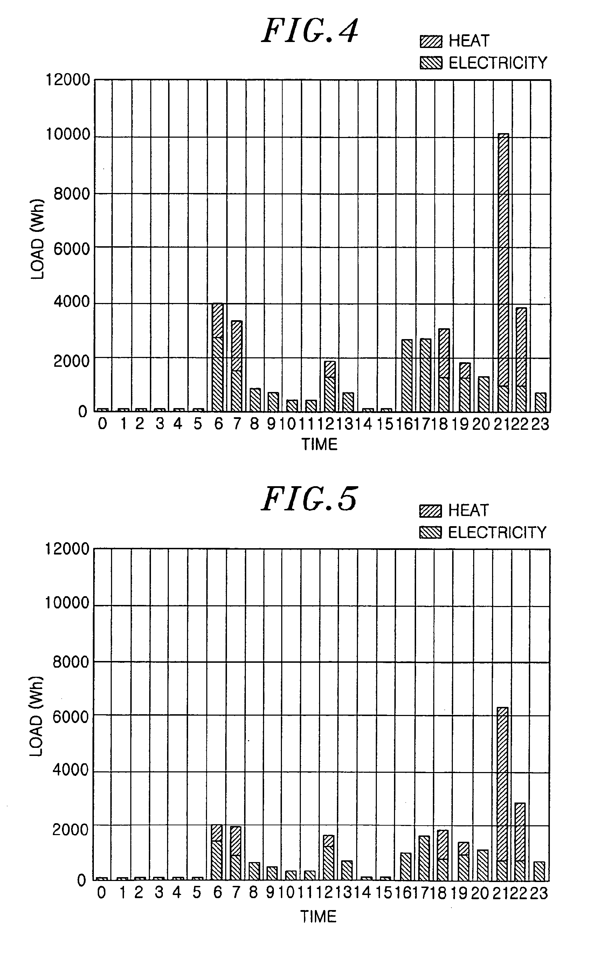

Although a case where the prediction period is one day is described in the aforementioned example, operation of the load apparatus 1 may be controlled in substantially real time by dividing one day into a plurality of time intervals (e.g., in 30 minutes basis or one hour basis), and using the time intervals as the prediction period. Figs. 4 and 5 show graphs in which the prediction period is set to one hour, and show changes in the electric energy (region indicated by hatching from top left to bottom right) and the thermal energy (region indicated by hatching from top right to bottom left) in an hour basis. Further, Fig. 4 depicts the winter, and Fig. 5 depicts the summer.

As described above, when the thermal energy is stored by using the hot water storage tank, the hot water storage tank preferably stores the thermal energy required at a time zone (6 - 8 o'clock, 18 - 19 o'clock, 21 - 22 o'clock, or the like) in which the demand for the thermal energy is large.

The prediction processing unit 32 of the present embodiment uses usage conditions and operation states of each of load apparatuses 1 and electric powers consumed in each of load apparatuses 1 as history information, and the demand in the entire house can be predicted with respect to the electric energy and the thermal energy predicted as shown in Figs. 4 and 5. On the basis of such demand prediction, it is possible to determine a quantity of energy to be purchased and a timing of energy purchasing in order to prevent a shortage from occurring at the time zone when the demand of the thermal energy increases. Consequently, the demands of the electric energy and the thermal energy can be predicted for each prediction period, thereby determining the operation schedule of the fuel cell 7 such that the purchase quantity of energy is reduced.

Further, the fuel cell 7 has the hot water storage tank storing the thermal energy and an upper limit is set in an amount of the thermal energy stored in the hot water storage tank. That is, a maximum of the thermal energy that can be stored in the hot water storage tank is decided by an internal volume of the hot water storage tank. However, the thermal energy is not stored up to the maximum in actual using. The upper limit of the amount of thermal energy is set to be a value lower than the maximum. Typically, the amount of the stored thermal energy is controlled not to exceed the upper limit.

In the event of typical use, the upper limit is set to a constant value according to the demand prediction for the amount of the thermal energy. Further, there is provided a setting unit 71 so that a user can set the upper limit to be high when the demand amount for the thermal energy is temporarily increased by, e.g., a visitor. In this case, it is impossible to cope with a temporal increase in the demand amount for the thermal energy by the demand prediction of the thermal energy through the prediction processing unit 32. Thus, the upper limit of the amount of the thermal energy that can be stored in the hot water storage tank is configured to be given to the prediction processing unit 32. Accordingly, the prediction processing unit 32 can perform the demand prediction accordingly to a change in the upper limit, thereby adjusting the amount of the energy purchased.

Further, since the monitor 6 is provided as described above, the operation state and the history information of the load apparatus 1 can be visually displayed. That is, "visualization" of the demand/supply of the electric energy and the thermal energy is possible, and the user can be further motivated to do energy saving.

Further, in a case in which the fuel cell 7 is used as the aforementioned energy generating apparatus, when a demand for the electric energy is met, a shortage in the supply of the thermal energy takes place. Accordingly, the shortage in the thermal energy can be reduced by lowering the demand for the thermal energy, and an amount of energy to be purchased can be decreased. Alternatively, in a case in which a purchase unit cost of energy varies depending on a time zone, a cost of purchasing the energy can be reduced by purchasing the energy at the time zone where the purchase unit cost of the energy is low.

When the operation state of the load apparatus 1 and/or the upper limit of the hot water storage tank are changed (e.g. when a setting temperature of the air conditioner is changed), it is preferred that this change is notified by the monitor 6, and that a user is notified that a usage status of the energy in relation to the demand prediction is changed. Especially, when a change of increasing a demand amount of the energy is made in setting of the load apparatus 1, and when a change of increasing a supply amount of the energy is made in the energy generating apparatus (fuel cell 7), it is preferred that the changes are certainly notified. With this notification, the user can recognize a change in the cost of purchasing the energy, or the like. As a result, it is possible to make the user use the load apparatus 1 in consideration of the energy saving.

Through the monitor 6, the history information can be referred, and information can be acquired from the sensor 11 and the electricity consumption measurement device 21 in real time. Further, by using such pieces of information, a proposal for reducing the energy purchase and a proposal for reducing a cost of the energy purchase sum can be made.

In the second embodiment, as the energy generating apparatus, the fuel cell is taken by way of example. However, the aforementioned technology may be applied to the cogeneration apparatus generating by using the gas engine. Alternatively, in the distributed power source grid-connected with the electric power system which allows a reverse flow, it is possible to optimize a purchasing and selling of the electric power in conjunction with the distributed power source based on the demand prediction. The other configurations and operations are similar to those of the first embodiment.

While the invention has been shown and described with respect to the embodiments, it will be understood by those skilled in the art that various changes and modifications may be made without departing from the scope of the invention as defined in the following claims.

## Claims

1. An energy supply/demand control system comprising:
a plurality of load apparatuses used within a specific area, each of the load apparatuses including a sensor detecting a usage condition and an operation state thereof, and being autonomously controlled to operate based on information detected by the sensor;
an electricity consumption measurement device which measures an electricity consumption amount of each of the load apparatuses; and
a control device which obtains information about at least one of the usage condition and the operation state detected by the sensor and information about the electricity consumption amount measured by the electricity consumption measurement device through communications, calculates an estimated consumption amount based on the information from the sensor and the information about the electricity consumption amount, and controls energy supply and demand for the load apparatuses in the specific area based on the estimated consumption amount.

2. The energy supply/demand control system of claim 1, wherein the control device includes:
a history storage unit which stores the information about at least one of the usage condition and the operation state detected by the sensor and the information obtained from the electricity consumption measurement device as history information; and
a prediction processing unit which calculates an electricity consumption amount to be consumed by the load apparatuses during a predetermined prediction period as the estimated consumption amount, by using the history information related to the load apparatuses and information about at least one of the usage condition and the operation state detected by the sensor.

3. The energy supply/demand control system of claim 2, wherein, when the control device detects an instruction to start operation of one of the load apparatuses, the prediction processing unit obtains information about at least one of the usage condition and the operation state of the one load apparatus and calculates, as the estimated consumption amount, an electricity consumption amount predicted to be consumed by the one load apparatus during the prediction period from the start to the end of the operation of the one load apparatuses.

4. The energy supply/demand control system of claim 3, further comprising: as the load apparatuses,
a distributed power source having an power generation device for generating electricity from natural energy;
an electric storage device having a storage battery charged by at least one of the distributed power source and a commercial power source, and a remaining capacity detection unit which measures a remaining capacity of the storage battery, the electric storage device serving to supply an electric power from the storage battery to the load apparatus; and
a notification device which notifies a user of whether or not each load apparatus is operable,
wherein when the control device detects the instruction to start operation of one of the load apparatuses, the prediction processing unit calculates the estimated consumption amount of the one load apparatus; in case where there is not any load apparatus that is operating, the prediction processing unit obtains a reserved remaining capacity by subtracting the estimated consumption amount from the remaining capacity of the storage battery; and, in case where there is another load apparatus that is operating, the prediction processing unit calculates a sum of the estimated consumption amount of the one load apparatus and a residual obtained by subtracting an electricity amount consumed by the another operating load apparatus from an estimated consumption amount of the another operating load apparatus, and determines a reserved remaining capacity by subtracting the sum from the remaining capacity of the storage battery, and
wherein, when the reserved remaining capacity is equal to or less than a threshold, the notification device notifies a user of a suggestion that the time of starting the operation of the load apparatus be changed to a later time.
